# EUROPÄISCHE PATENTSCHRIFT

(11) **EP 4 317 086 B1**
(45) Veröffentlichungstag und Bekanntmachung des Hinweises auf die Patenterteilung: **22.01.2025**
(21) Anmeldenummer: 23186432.3
(22) Anmeldetag: 19.07.2023
(51) Int. Cl.: C02F 1/66, C02F 1/68, E04H 4/12, C02F 1/00, C02F 3/00, C02F 103/42

(54) **VORRICHTUNG ZUR ZUFÜHRUNG VON CO2 AUS BODENLUFT IN EINE SCHWIMMANLAGE**
DEVICE FOR SUPPLYING CO2 FROM SOIL AIR TO A SWIMMING FACILITY
DISPOSITIF D'ALIMENTATION EN CO2 DE L'AIR DU SOL DANS UNE INSTALLATION POUR NAGER

(30) Priorität: 04.08.2022 AT 505892022
(43) Veröffentlichungstag der Anmeldung: 07.02.2024
(73) Patentinhaber: Biotop P&P International GmbH, 3400 Weidling (AT)
(72) Erfinder: Schelker, Jakob, 1230 Wien (AT)
(74) Vertreter: Vinazzer, Edith

(56) Entgegenhaltungen:
- EP-B1- 0 365 625
- EP-B1- 0 928 776
- DE-A1- 2 255 734
- JP-A- 2006 130 504

## Beschreibung

Die Erfindung betrifft eine Vorrichtung zur Zuführung von CO₂ aus Bodenluft in biologisch aufbereitetes Wasser einer Schwimmanlage mit einer das Wasser mechanisch filternden, pumpenbetriebenen und eine Rohrleitung aufweisenden Filteranlage,
wobei die Vorrichtung folgende Komponenten aufweist:
ein in die ungesättigte Bodenzone zu verlegendes Bodendrainagesystem zum Aufnehmen von CO₂ reicher Bodenluft,
eine mit dem Bodendrainagesystem verbindbare, aus Rohrabschnitten bestehende Bodenluft-Rohrleitung,
ein wasserdicht ausgeführtes Behältnis zur Unterbringung von Rohrabschnitten der Bodenluft-Rohrleitung,
eine Venturidüse zum Einbau in die Rohrleitung der Filteranlage,
ein Schwimmerventil zum Einbau in die Bodenluft-Rohrleitung, welches sich beim Einströmen von Wasser aus dem Bodendrainagesystem schließt,
ein Rückschlagventil zum Einbau in die Bodenluft-Rohrleitung, welches ein Rückfließen von Wasser aus der Schwimmanlage verhindert,
ein zwischen dem Schwimmerventil und dem Rückschlagventil durchgehender Rohrabschnitt,
ein an das Rückschlagventil anschließender, mit der Venturidüse der Rohrleitung der Filteranlage zu verbindender Rohrabschnitt.

Zur Reduzierung des Algenwachstums und zur Verbesserung der Filterleistung wird in biologisch zu reinigendem Wasser von Schwimmanlagen, wie Schwimmteichen oder Schwimmbecken, Kohlendioxid (CO₂) eingebracht. Zu den positiven Aspekten des Kohlendioxids gehört, dass etwaige Wasserpflanzen und Biofilteranlagen mit CO₂ versorgt werden. Das CO₂ liegt dabei in seiner reinen, gelösten Form vor, während ansonsten der Großteil des anorganischen Kohlenstoffes im Wasser mit einem pH-Wert zwischen 7,2 und 8,5 als Carbonat oder Hydrogen-Carbonat vorliegt. Vorteilhafterweise wird der pH-Wert des Wassers durch die gelöste Form des CO₂ verringert, wodurch das Bilden von Kalkbelägen in kalkreichen Wässern gemäß dem Kalk-Kohlensäure-Gleichgewicht reduziert wird. Darüber hinaus erhöht das im Wasser gelöste CO₂ die Sorptivität von Anionen-Tauschermedien.

Bei einem bekannten Verfahren zur Aufbereitung von Wasser in Schwimmanlagen wird das Wasser mechanisch und biologisch gereinigt, wobei in einem ersten Wasserkreislauf oberflächennahes Beckenwasser mechanisch gereinigt bzw. gefiltert wird und in einem zweiten Wasserkreislauf mit einem biologischen Filter im Beckenwasser befindliche Trübstoffe zurückgehalten und darin enthaltene organische Stoffe sowie im Beckenwasser gelöste organische Stoffe durch die Tätigkeit von Bakterien mineralisiert werden. Bei dem aus der EP 2 282 974 B1 bekannten Verfahren passiert im zweiten Wasserkreislauf das Wasser zuerst den biologischen Filter und anschließend, zur adsorptiven Bindung von Phosphaten, einen separaten Anionentauscher.

Die positiven Effekte der Zuführung von CO₂ aus Bodenluft sind schon seit längerem bekannt, beispielsweise befasst sich die EP 0 928 776 B1 mit einem Verfahren und einer Vorrichtung zur Verminderung des Algenwachstums in natürlichen oder in künstlich angelegten Gewässern mittels CO₂ aus Bodenluft. Die Vorrichtung weist ein im Boden verlegbares Luftsammelsystem, insbesondere aus gelochten Drainagerohren oder -schläuchen, zumindest eine Pumpe und Leitungsschläuche bzw. Rohre sowie im Wasser der Schwimmanlage verlegbare Linienbelüfter, beispielsweise in Form von gelochten Rohren oder Schläuchen, auf.

Eine weiterentwickelte Vorrichtung entspricht jener der eingangs genannten Art und weist bereits ein Schwimmerventil, welches sich beim Einströmen von Wasser aus dem Bodendrainagesystem schließt, und ein Rückschlagventil auf, welche bei Bedarf ein Rückfließen von Wasser aus der Schwimmanlage verhindert. Diese bekannte Vorrichtung verhindert zwar, dass bei temporär mit Wasser gesättigtem Boden, etwa nach einem Starkregen-Ereignis, Bodenwasser ins Becken eindringen kann und/oder Wasser aus der Schwimmanlage, etwa einem Schwimmbecken, in den Boden zurückfließen kann, aber sowohl das Schwimmerventil als auch die Rückschlagventil verbleiben oft nach einem Absinken des Bodenwasserstandes und einer erneuten Betriebsaufnahme der Filteranlage infolge eines sich einstellenden Unterdruckes im Rohrabschnitt zwischen dem Schwimmerventil und dem Rückschlagventil dauerhaft geschlossen, sodass die Rohrleitung im Bereich des Schwimmerventils geöffnet werden muss.

Der Erfindung liegt somit die Aufgabe zugrunde, bei einer Vorrichtung der eingangs genannten Art dafür zu sorgen, dass sie sich nach einem Sättigungsereignis ohne separate händische Eingriffe in die Bodenluft-Rohrleitung ein Betrieb der mechanischen Filteranlage unter Einleiten von CO₂ wieder ermöglicht ist.

Gelöst wird die gestellte Aufgabe erfindungsgemäß durch ein in den Rohrabschnitt zwischen dem Schwimmerventil und dem Rückschlagventil anzubauendes Druckausgleichselement zum Abbauen eines bei geschlossenem Schwimmerventil und geschlossenem Rückschlagventil gegenüber dem Druck der Umgebungsluft sich einstellenden Unterdruckes.

Gemäß der Erfindung wird durch eine einfache Maßnahme dafür gesorgt, dass, sich ein zwischen dem geschlossenen Schwimmerventil und dem geschlossenen Rückschlagventil einstellender Unterdruck zuverlässig und innerhalb eines kurzen Zeitraumes abbaut. Das Schwimmerventil und das Rückschlagventil kehren in ihre Ausgangslagen zurück, sodass bei einem Wiederbetrieb der Filteranlage und bei wieder ungesättigtem Boden ein CO₂ Eintrag in das Wasser der Schwimmanlage erfolgen kann.

Bei einer besonders bevorzugten Ausführung ist das Druckausgleichselement ein Membranventil mit einer für Wasser undurchlässigen Gasmembran. Die wasserundurchlässige Membran verhindert einen Druckausgleich mit Wasser, falls die Vorrichtung mit Wasser überschwemmt werden sollte, und gewährleistet einen besonders schnellen Druckausgleich mit Umgebungsluft.

Ein besonders kompakter und zweckmäßiger Aufbau der Vorrichtung wird dadurch unterstützt, dass das Schwimmerventil und das Rückschlagventil in innerhalb des Behältnisses befindlichen Rohrabschnitten des Rohres eingebaut sind. Bei einer besonders einfachen Ausführung des Rückschlagventils ist dieses eine Rückschlagklappe bzw. weist dieses eine Rückschlagklappe auf.

Der bereits erwähnte kompakte und zweckmäßige Aufbau der Vorrichtung wird ferner dadurch gewährleistet, dass das Schwimmerventil zwischen zwei vertikal verlaufenden Rohrabschnitten, das Rückschlagventil in einem über einen 90°-Rohrbogen anschließenden, horizontal verlaufenden Rohrabschnitt und das Druckausgleichselement im Bereich des Rohrbogens positioniert sind. In diesem Zusammenhang ist es auch besonders vorteilhaft, wenn die Venturidüse in einem durch das Behältnis hindurchgeführten, insbesondere horizontal verlaufenden Rohrabschnitt der zur Filteranlage gehörenden Rohrleitung eingebaut ist.

Die Erfindung gestattet unterschiedliche Möglichkeiten der Unterbringung bzw. Anordnung der Vorrichtung. Bei einer besonders einfachen Ausführung ist das Behältnis ein in den Boden eingebauter Schacht. Bei einer weiteren Ausführung, die eine einfache Vorabinstallation der Komponenten der Vorrichtung gestattet, ist das Behältnis eine aus Kunststoff gefertigte Box.

Die Schwimmanlage weist bevorzugt als Schwimmbereich ein Schwimmbecken oder einen Schwimmteich auf.

Das mit CO₂-haltiger Bodenluft angereicherte, mechanisch gefilterte Wasser, kann dem Schwimmbereich der Schwimmanlage bei einer besonders einfachen Ausführung unmittelbar zugeführt werden. Bei einer weiteren Ausführung ist das mit CO₂-haltiger Bodenluft angereicherte, mechanisch gefilterte Wasser einer mit dem Schwimmbereich verbundenen CO₂-Anreicherungskammer zuführbar, welche niveaugleich mit dem Wasser des Schwimmbereiches gefüllt ist und über eine oder mehrere Zuführöffnungen mit dem Schwimmbereich in Verbindung ist. Bei dieser Ausführung löst sich CO₂ im Wasser der Anreicherungskammer, was von manchen Benützern der Schwimmanlage als angenehmer empfunden wird.

Weitere Merkmale, Vorteile und Einzelheiten der Erfindung werden nun anhand der schematischen Zeichnung, die zwei Ausführungsbeispiele darstellt, näher beschrieben. Dabei zeigen
Fig. 1 eine Ausführung der Anordnung einer erfindungsgemäßen Vorrichtung bei einem Schwimmbecken,
Fig. 2 eine weitere Ausführungsvariante der Anordnung einer erfindungsgemäßen Vorrichtung bei einem Schwimmbecken,
wobei in Fig. 1 und Fig. 2 die Vorrichtungen im Verhältnis zum Schwimmbecken stark vergrößert eingezeichnet ist, und
Fig. 3 einen die Vorrichtung umfassenden Ausschnitt aus Fig. 1 in nochmals vergrößerter Darstellung.

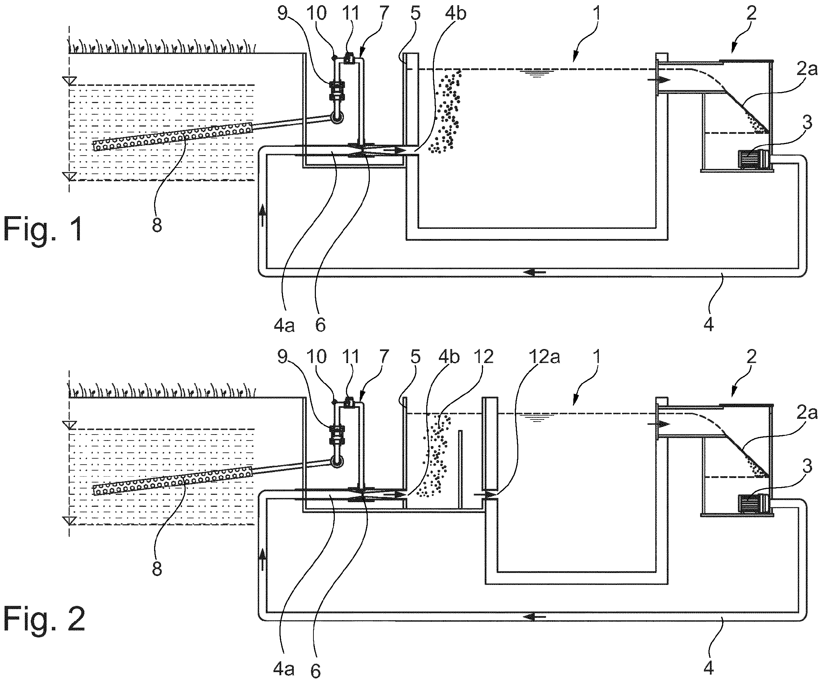

Fig. 1 und Fig. 2 zeigen ein Schwimmbecken 1, welches auf herkömmliche Weise, beispielsweise als Betonbecken mit Folienauskleidung, ausgeführt ist und mit Wasser befüllt ist. Das im Schwimmbecken 1 befindliche Wasser wird auf nicht gezeigte Weise in einem Wasserkreislauf biologisch gereinigt, oberflächennahes Wasser wird zusätzlich mit einer pumpenbetriebenen Filteranlage in einem weiteren Kreislauf mechanisch gereinigt und gefiltert.

Die pumpenbetriebene Filteranlage weist in den gezeigten Beispielen einen nahe der Wasseroberfläche an das Schwimmbecken 1 angeschlossenen, üblichen Skimmer 2 mit einem innerhalb des Skimmers 2 befindlichen Sieb 2a oder alternativ einem Filterkorb zur Grobfilterung des Schwimmbeckenwassers auf. Am Boden des Skimmers 2 ist eine Tauchpumpe 3 positioniert, die im Betrieb der Filteranlage Schwimmbeckenwasser in eine Rohrleitung 4, die insbesondere im Erdboden verlegt ist, befördert. Die Pumpe 3 kann an anderer Stelle der Filteranlage im Rohrleitungssystem, beispielsweise in einem separaten, im Erdboden eingebauten Pumpenschacht, untergebracht sein. Ein Rohrabschnitt 4a der Rohrleitung 4 mündet gegenüber dem Skimmer 2 über zumindest eine Einströmöffnung 4b ins Schwimmbecken 1. Der Rohrabschnitt 4a passiert bzw. durchquert ein wasserdicht ausgeführtes und üblicherweise Umgebungsluft enthaltendes Behältnis, insbesondere und wie die Figuren zeigen einen im Boden verbauten Schacht 5, alternativ eine Box, die entweder frei aufgestellt wird oder in einem anderen Schacht, beispielsweise einem Tauchpumpenschacht, positioniert wird. Innerhalb des Schachtes 5 ist im Endabschnitt 4a eine Venturidüse 6 eingebaut.

Mittels eines beispielsweise ebenfalls innerhalb des Schachtes 5 im Endabschnitt 4a eingebauten, nicht dargestellten Kugelhahns wird der Wasserdruck bzw. Betriebsdruck der Filteranlage eingestellt und geregelt, ein nicht gezeigtes Manometer zeigt den anliegenden Druck an.

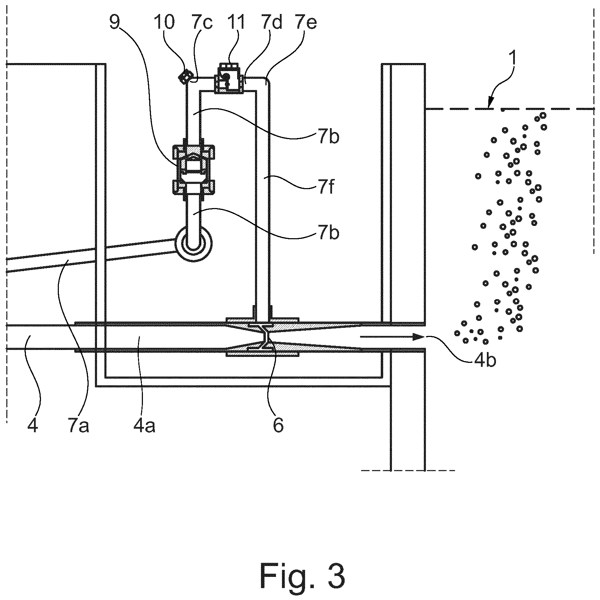

Wie insbesondere Fig. 1 und Fig. 2 in Verbindung mit Fig. 3 zeigen sind im Schacht 5 Bestandteile einer Vorrichtung zur Anreicherung des Wassers der Schwimmanlage mit CO₂ untergebracht bzw. eingebaut. Ein Rohrabschnitt 7a einer Bodenluft-Rohrleitung 7 ist durch die Schachtwand hindurch mit einem perforierte Rohre oder Schläuche aufweisenden, zur Vorrichtung gehörenden Bodendrainagesystem 8 verbunden. Das Bodendrainagesystem 8 ist im umliegenden Boden in der ungesättigten Bodenzone, also oberhalb der Grundwasseroberfläche, verlegt und leitet unter einem gleichmäßigen Gefälle Bodenluft in die Bodenluft-Rohrleitung 7. Die Bodenluft dient als natürliche und dauerhaft verfügbare CO₂-Quelle, da sie bei natürlich gewachsenen, daher mit Pflanzen bewachsenen Böden typischerweise über eine 5- bis 20-fach erhöhte CO₂-Konzentration gegenüber der Atmosphärenluft verfügt.

Innerhalb des Schachtes 5 weist die Bodenluft-Rohrleitung 7 vorerst an den Rohrabschnitt 7a anschließende, vertikal verlaufende Rohrabschnitte 7b auf, zwischen welchen ein Schwimmerventil 9 eingebaut ist. Das Schwimmerventil 9 schließt bei Wasserkontakt, das heißt wenn vom Boden her bei einer temporären Sättigung mit Wasser, Bodenwasser über das Bodendrainagesystem 8 einströmt. In einem an den oberen Rohrabschnitt 7b anschließenden 90°- Rohrbogen 7c ist ein Druckausgleichselement 10, insbesondere ein über eine wasserundurchlässige Gasmembran verfügendes Membranventil, angebaut. An den Rohrbogen 7c schließt weiterer, insbesondere horizontal verlaufender Rohrabschnitt 7d an, in welchem eine Rückschlagklappe 11 derart eingebaut ist, dass vom Schwimmbecken 1 eindringendes Wasser nicht weiter durchfließen kann. Es folgt ein weiterer 90°- Rohrbogen 7e und anschließend ein vertikal verlaufender Rohrabschnitt 7f, welcher in Richtung des Bodens des Schachtes 5 verläuft und in die Venturidüse 6 einmündet. Die Venturidüse 6 erzeugt somit im Betrieb der Filteranlage in der Bodenluft-Rohrleitung 7 und dem Bodendrainagesystem 8 einen Unterdruck, welcher durch die Ansaugung von Bodenluft ausgeglichen wird, sodass mit CO₂ angereicherter Luft versetztes Schwimmbeckenwasser während der Betriebszeit der Filteranlage in das im Schwimmbecken befindliche Wasser einströmt.

Ist nun der Boden vorübergehend, etwa durch Starkregen, wassergesättigt, dringt Wasser durch das Bodendrainagesystem 8 in die Bodenluft-Rohrleitung 7 der Vorrichtung ein, das Schwimmerventil 9 schließt und ein Einströmen von Bodenwasser in das Schwimmbecken 1 wird verhindert. Ist die Filteranlage in Betrieb schließt das beim Abschalten der Pumpe 3 der Filteranlage in die Bodenluft-Rohrleitung 7 aus dem Schwimmbecken 1 einströmende Wasser die Rückschlagklappe 11. Zwischen dem Schwimmerventil 9 und der Rückschlagklappe 11 würde ohne Druckausgleichselement 10 ein Unterdruck verbleiben, welcher sowohl das Schwimmerventil 9 als auch die Rückschlagklappe 11 dauerhaft, auch nach einem Absinken des Bodenwasserstandes und einer erneuten Betriebsaufnahme der Pumpe 3 der Filteranlage, geschlossen halten würde. Das Druckausgleichselement 10 sorgt für einen Abbau des zwischen dem Schwimmerventil 9 und der Rückschlagklappe 11 vorhandenen Unterdruckes. Ein Membranventil als Druckausgleichselement 10 gewährleistet einen besonders raschen und verlässlichen Druckausgleich innerhalb weniger Minuten mit der im Schacht 5 vorhandenen Umgebungsluft. Die wasserundurchlässige Gasmembran verhindert einen Druckausgleich mit Wasser, falls der Schacht mit Wasser gefüllt bzw. überschwemmt sein sollte. Sobald der Druckausgleich bei abgeschalteter Filteranlage erfolgt ist, kann das Schwimmerventil 9 wieder öffnen, sofern kein Wasser mehr im Bodendrainagesystem 8 bzw. im Boden vorhanden ist und die gesamte Filteranlage kann unter Offenhaltung der Rückschlagklappe 11 wieder regulär in Betrieb gehen.

Bei der in Fig. 2 gezeigten Ausführung strömt das mit CO₂-haltiger Luft angereicherte, gefilterte Schwimmbeckenwasser nicht unmittelbar ins Schwimmbecken 1 zurück, sondern in eine mit dem Schwimmbecken verbundene CO₂-Anreicherungskammer 12. Die CO₂-Anreicherungskammer 12 niveaugleich mit Schwimmbeckenwasser gefüllt und über eine oder mehrere Zuführöffnungen 12a mit dem Schwimmbecken 1 in Verbindung.

Das Druckausgleichselement 10, daher auch das Membranventil, kann eines der am Markt frei erhältlichen einschlägigen Produkte sein. Anstelle einer Rückschlagklappe kann ein anderes Rückschlagventil eingebaut werden.

### Bezugszeichenliste

- 1: Schwimmbecken
- 2: Skimmer
- 2a: Sieb
- 3: Pumpe
- 4: Rohrleitung
- 4a: Rohrabschnitt
- 4b: Einströmöffnung
- 5: Schacht
- 6: Venturidüse
- 7: Bodenluft-Rohrleitung
- 7a, 7b, 7d, 7f: Rohrabschnitt
- 7c, 7e: 90°-Bogen
- 8: Bodendrainagesystem
- 9: Schwimmerventil
- 10: Druckausgleichselement
- 11: Rückschlagklappe
- 12: CO₂-Anreicherungskammer
- 12a: Zuführöffnung

## Patentansprüche

1. Vorrichtung zur Zuführung von CO₂ aus Bodenluft in biologisch aufbereitetes Wasser einer Schwimmanlage mit einer das Wasser mechanisch filternden, pumpenbetriebenen und eine Rohrleitung (4) aufweisenden Filteranlage,
wobei die Vorrichtung folgende Komponenten aufweist:
ein in die ungesättigte Bodenzone zu verlegendes Bodendrainagesystem (8) zum Aufnehmen von CO₂ reicher Bodenluft,
eine mit dem Bodendrainagesystem (8) verbindbare, aus Rohrabschnitten (7a bis 7f) bestehende Bodenluft-Rohrleitung (7),
ein wasserdicht ausgeführtes Behältnis (5) zur Aufnahme von Rohrabschnitten (7a bis 7f) der Bodenluft-Rohrleitung (7),
eine Venturidüse (6) zum Einbau in der Rohrleitung (4) der Filteranlage,
ein Schwimmerventil (9) zum Einbau in die Bodenluft-Rohrleitung (7), welches sich beim Einströmen von Wasser aus dem Bodendrainagesystem (8) schließt,
ein Rückschlagventil (11) zum Einbau in die Bodenluft-Rohrleitung (7), welches ein Rückfließen von Wasser aus der Schwimmanlage verhindert,
ein zwischen dem Schwimmerventil (9) mit dem Rückschlagventil (11) durchgehender Rohrabschnitt,
ein an das Rückschlagventil (11) anschließender, mit der Venturidüse (6) in der Rohrleitung (4) der Filteranlage zu verbindender Rohrabschnitt (7f),
**gekennzeichnet durch**
ein in den Rohrabschnitt zwischen dem Schwimmerventil (9) und dem Rückschlagventil (11) anzubauendes Druckausgleichselement (10) zum Abbauen eines bei geschlossenem Schwimmerventil (9) und geschlossenem Rückschlagventil (11) gegenüber dem Druck der Umgebungsluft sich einstellenden Unterdruckes.

2. Vorrichtung nach Anspruch 1, **dadurch gekennzeichnet, dass** das Druckausgleichselement (10) ein Membranventil mit einer für Wasser undurchlässigen Gasmembran ist.

3. Vorrichtung nach Anspruch 1 oder 2, **dadurch gekennzeichnet, dass** das Schwimmerventil (9) und das Rückschlagventil (11) in innerhalb des Behältnisses (5) befindlichen Rohrabschnitten (7b, 7d) des Rohres eingebaut sind.

4. Vorrichtung nach einem oder mehreren der Ansprüche 1 bis 3, **dadurch gekennzeichnet, dass** Rückschlagventil (11) eine Rückschlagklappe ist.

5. Vorrichtung nach einem oder mehreren der Ansprüche 1 bis 4, **dadurch gekennzeichnet, dass** das Schwimmerventil (9) zwischen zwei vertikal verlaufenden Rohrabschnitten (7b), das Rückschlagventil (11) in einem über einen 90°- Rohrbogen (7c) anschließenden, horizontal verlaufenden Rohrabschnitt (7d) und das Druckausgleichselement (10) im Bereich des Rohrbogens (7c) positioniert sind.

6. Vorrichtung nach einem oder mehreren der Ansprüche 1 bis 5, **dadurch gekennzeichnet, dass** die Venturidüse (6) in einem durch das Behältnis (5) hindurch geführten, insbesondere horizontal verlaufenden Rohrabschnitt (4a) der zur Filteranlage gehörenden Rohrleitung (4) eingebaut ist.

7. Vorrichtung nach einem oder mehreren der Ansprüche 1 bis 6, **dadurch gekennzeichnet, dass** das Behältnis ein in den Boden eingebauter Schacht (5) ist.

8. Vorrichtung nach einem oder mehreren der Ansprüche 1 bis 6, **dadurch gekennzeichnet, dass** das Behältnis eine aus Kunststoff gefertigte Box ist, in welche die innerhalb der Box unterzubringenden Komponenten der Vorrichtung vorinstallierbar sind.

9. Vorrichtung nach einem oder mehreren der Ansprüche 1 bis 8, **dadurch gekennzeichnet, dass** die Schwimmanlage als Schwimmbereich ein Schwimmbecken (1) oder einen Schwimmteich aufweist.

10. Vorrichtung nach einem oder mehreren der Ansprüche 1 bis 9, **dadurch gekennzeichnet, dass** das mit CO₂-haltiger Bodenluft angereicherte, mechanisch gefilterte Wasser dem Schwimmbereich der Schwimmanlage unmittelbar zuführbar ist.

11. Vorrichtung nach einem oder mehreren der Ansprüche 1 bis 9, **dadurch gekennzeichnet, dass** das mit CO₂-haltiger Bodenluft angereicherte, mechanisch gefilterte Wasser einer mit dem Schwimmbereich verbundenen CO₂-Anreicherungskammer (12) zuführbar ist, welche niveaugleich mit dem Wasser des Schwimmbereiches gefüllt ist und über eine oder mehrere Zuführöffnungen (12a) mit dem Schwimmbereich in Verbindung ist.

## Claims

1. Device for supplying CO₂ from soil air into biologically treated water of a swimming facility with a pump-operated filter system that filters the water mechanically and has a pipeline (4), wherein the device has the following components:
a soil drainage system (8) to be installed in the unsaturated soil zone to absorb CO₂-rich soil air,
a soil air pipeline (7) which can be connected to the soil drainage system (8) and consists of pipe sections (7a to 7f),
a watertight container (5) for accommodating pipe sections (7a to 7f) of the soil air pipeline (7), a Venturi nozzle (6) for installation in the pipeline (4) of the filter system,
a float valve (9) for installation in the soil air pipeline (7), which closes when water flows in from the soil drainage system (8), a check valve (11) for installation in the soil air pipeline (7), which prevents water from flowing back from the swimming facility,
a pipe section passing between the float valve (9) and the check valve (11),
a pipe section (7f) adjoining the check valve (11) and to be connected to the Venturi nozzle (6) in the pipeline (4) of the filter system,
**characterized by**
a pressure compensation element (10) to be installed in the pipe section between the float valve (9) and the check valve (11) for reducing a negative pressure compared to the pressure of the ambient air when the float valve (9) and the check valve (11) are closed.

2. Device according to Claim 1, **characterized in that** the pressure compensation element (10) is a diaphragm valve with a gas membrane impermeable to water.

3. Device according to Claim 1 or 2, **characterized in that** the float valve (9) and the check valve (11) are installed in pipe sections (7b, 7d) of the pipe located inside the container (5).

4. Device according to one or more of Claims 1 to 3, **characterized in that** the check valve (11) is a check flap.

5. Device according to one or more of Claims 1 to 4, **characterized in that** the float valve (9) is positioned between two vertically running pipe sections (7b), the check valve (11) is positioned in a horizontally running pipe section (7d) adjoining via a 90° pipe bend (7c) and the pressure compensation element (10) is positioned in the region of the pipe bend (7c).

6. Device according to one or more of Claims 1 to 5, **characterized in that** the Venturi nozzle (6) is installed in a pipe section (4a) of the pipeline (4) belonging to the filter system, which pipe section runs through the container (5), in particular horizontally.

7. Device according to one or more of Claims 1 to 6, **characterized in that** the container is a shaft (5) built into the ground.

8. Device according to one or more of Claims 1 to 6, **characterized in that** the container is a box made of plastic, into which the components of the device to be accommodated within the box can be pre-installed.

9. Device according to one or more of Claims 1 to 8, **characterized in that** the swimming facility has a swimming pool (1) or a swimming pond as a swimming area.

10. Device according to one or more of Claims 1 to 9, **characterized in that** the mechanically filtered water enriched with CO₂-containing soil air can be fed directly to the swimming area of the swimming facility.

11. Device according to one or more of Claims 1 to 9, **characterized**
**in that** the mechanically filtered water enriched with CO₂-containing soil air can be fed to a CO₂ enrichment chamber (12) connected to the swimming area, which is filled to the same level as the water of the
swimming area and is connected to the swimming area via one or more feed openings (12a).

## Revendications

1. Dispositif d'alimentation en CO₂ provenant de l'air du sol dans de l'eau traitée biologiquement d'une installation pour nager avec une installation de filtration filtrant mécaniquement l'eau, actionné par une pompe et présentant une conduite (4), le dispositif présentant les composants suivants :
un système de drainage du sol (8) à poser dans la zone non saturée du sol pour recueillir l'air du sol riche en CO₂,
une conduite d'air du sol (7) pouvant être reliée au système de drainage du sol (8) et constituée de tronçons de tuyau (7a à 7f),
un récipient (5) étanche à l'eau destiné à recevoir des tronçons de tuyau (7a à 7f) de la conduite d'air du sol (7), une buse venturi (6) à monter dans la conduite (4) de l'installation de filtration,
un clapet à flotteur (9) destiné à être monté dans la conduite d'air du sol (7), qui se ferme lorsque l'eau s'écoule du système de drainage de sol (8), un clapet anti-retour (11) destiné à être monté dans la conduite d'air du sol (7), qui empêche le reflux de l'eau depuis l'installation pour nager,
un tronçon de tuyau passant entre le clapet à flotteur (9) et le clapet anti-retour (11),
un tronçon de tuyau (7f) se raccordant au clapet anti-retour (11) et devant être relié à la buse venturi (6) dans la conduite (4) de l'installation de filtration,
**caractérisé par**
un élément de compensation de pression (10) à monter dans le tronçon de tuyau entre le clapet à flotteur (9) et le clapet anti-retour (11) pour réduire une dépression qui s'établit par rapport à la pression de l'air ambiant lorsque le clapet à flotteur (9) est fermé et le clapet anti-retour (11) est fermé.

2. Dispositif selon la revendication 1, **caractérisé en ce que** l'élément de compensation de pression (10) est une vanne à membrane avec une membrane de gaz imperméable à l'eau.

3. Dispositif selon la revendication 1 ou 2, **caractérisé en ce que** le clapet à flotteur (9) et le clapet anti-retour (11) sont installés dans des sections de tuyau (7b, 7d) du tuyau situées à l'intérieur du récipient (5).

4. Dispositif selon l'une ou plusieurs des revendications 1 à 3, **caractérisé en ce que** le clapet anti-retour (11) est un clapet de non-retour.

5. Dispositif selon l'une ou plusieurs des revendications 1 à 4, **caractérisé en ce que** le clapet à flotteur (9) est positionné entre deux sections de tuyau (7b) s'étendant verticalement, le clapet anti-retour (11) est positionné dans un tronçon de tuyau (7d) s'étendant horizontalement et se raccordant par un coude de tuyau (7c) à 90°, et l'élément de compensation de pression (10) est positionné dans la zone du coude de tuyau (7c).

6. Dispositif selon l'une ou plusieurs des revendications 1 à 5, **caractérisé en ce que** la buse venturi (6) est montée dans un tronçon de tuyau (4a), notamment horizontal, de la conduite (4) appartenant à l'installation de filtration, qui traverse le récipient (5).

7. Dispositif selon l'une ou plusieurs des revendications 1 à 6, **caractérisé en ce que** le récipient est un puits (5) installé dans le sol.

8. Dispositif selon l'une ou plusieurs des revendications 1 à 6, **caractérisé en ce que** le récipient est une boîte fabriquée en matière plastique dans laquelle les composants du dispositif à loger à l'intérieur de la boîte peuvent être préinstallés.

9. Dispositif selon l'une ou plusieurs des revendications 1 à 8, **caractérisé en ce que** l'installation pour nager présente comme zone de baignade une piscine (1) ou une piscine naturelle.

10. Dispositif selon l'une ou plusieurs des revendications 1 à 9, **caractérisé en ce que** l'eau enrichie en air du sol contenant du CO₂ et filtrée mécaniquement peut être amenée directement à la zone de baignade de l'installation pour nager.

11. Dispositif selon l'une ou plusieurs des revendications 1 à 9, **caractérisé en ce que** l'eau enrichie en air du sol contenant du CO₂ et filtrée mécaniquement peut être amenée à une chambre d'enrichissement en CO₂ (12) reliée à la zone de baignade, qui est remplie à niveau avec l'eau de la zone de baignade et qui communique avec la zone de baignade par un ou plusieurs orifices d'alimentation (12a).
